(19)

Europäisches
Patentamt
European
Patent Office
Office européen
des brevets

(11) **EP 2 301 817 B1**

(12) **EUROPEAN PATENT SPECIFICATION**

(45) Date of publication and mention
of the grant of the patent:
**19.10.2011 Bulletin 2011/42**

(51) Int Cl.:
**B60W 30/18** *(2006.01)* **B60W 10/06** *(2006.01)*
**B60W 10/08** *(2006.01)* **B60W 20/00** *(2006.01)*

(21) Application number: **10175861.3**

(22) Date of filing: **08.09.2010**

(54) **Electric power generation control system for internal combustion engine**

System zur Steuerung der elektrischen Stromerzeugung für einen Verbrennungsmotor

Système de contrôle de la génération d'électricité pour moteur à combustion interne

(84) Designated Contracting States:
**DE**

(30) Priority: **28.09.2009 JP 2009221920**

(43) Date of publication of application:
**30.03.2011 Bulletin 2011/13**

(73) Proprietor: **Honda Motor Co., Ltd.**
**Tokyo 107-8556 (JP)**

(72) Inventor: **Tsuda, Masaki**
**c/o Honda R & D Co., Ltd.**
**Saitama 351-0193 (JP)**

(74) Representative: **Prechtel, Jörg**
**Weickmann & Weickmann**
**Patentanwälte**
**Postfach 86 08 20**
**81635 München (DE)**

(56) References cited:
**WO-A1-2007/045970 WO-A1-2007/107464**
**DE-A1- 10 249 621**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

Field of the Invention

The present invention relates to an electric power generation control system for an internal combustion engine, for controlling electric power generation by a generator connected to the engine when the engine is being stopped, according to the preamble of claim 1.

Description of the Related Art

Conventionally, there has been proposed an electric power generation control system for an internal combustion engine e.g. in Japanese Patent No. 3838188. This internal combustion engine is of a so-called hybrid type which executes power running operation or regenerative operation using a motor-generator connected to the engine according to the operating conditions of the engine. During the power running operation, the motor-generator generates motive power as a motor to assist the output of the engine, whereas during the regenerative operation, the motor-generator generates electric power as a generator. The generated electric power is stored in a battery, and is used for the power running operation and the like. Further, when predetermined automatic stopping conditions (idle stop conditions) are satisfied e.g. during waiting at a stoplight, the electric power generation control system causes the motor-generator to execute the regenerative operation until the engine is completely stopped. Further, at this time, the amount of electric power generated by the motor-generator (torque used for electric power generation by the motor-generator) is controlled such that it is reduced at a constant change rate, thereby causing the engine to be smoothly stopped.

It is known that in an internal combustion engine, such as a diesel engine, having a high compression ratio, when the engine is being stopped, a rate of reduction of the amount of intake air is smaller compared with a rate of reduction of the rotational speed of the engine, so that pressure in a combustion chamber becomes too high, which causes vibration of the engine. Further, it is also known that to eliminate such an inconvenience, the opening of an intake shutter is caused to be reduced after issuing a command for stopping the engine so as to reduce the amount of intake air, thereby performing vibration damping control for the purpose of prevention of occurrence of such vibration. However, when the conventional electric power generation control system is applied to such an engine, the torque used for electric power generation is maximum immediately after issuing the command for stopping, which causes a sharp decrease in the rotational speed of the engine, and hence even if the above-mentioned vibration damping control is executed, it is impossible to sufficiently reduce the amount of intake air with respect to the decrease in the rotational speed of the engine. In this case, the pressure in the combustion chamber becomes too large to prevent occurrence of the vibration when the engine is being stopped. On the other hand, with a view to preventing occurrence of such vibration, when electric power generation by the generator is inhibited when the engine is being stopped, it is impossible to benefit from improved fuel economy etc. by electric power generation.

DE 102 49 621 A1 discloses a power generation control system for an internal combustion engine according to the preamble part of claim 1. The conventional control system drives a motor generator as a motor for a short time when the engine is stopped such as to positively produce a correcting moment which opposes the kick back moment of the engine when the engine is stopped.

SUMMARY OF THE INVENTION

It is an object of the present invention to provide an electric power generation control system for an internal combustion engine, which is capable of preventing occurrence of vibration of the engine when the engine is being stopped and improving fuel economy through electric power generation as much as possible.

To attain the above object, the present invention provides an electric power generation control system for an internal combustion engine, for controlling electric power generation by a generator connected to the engine when the engine is being stopped, comprising intake air amount-adjusting means for adjusting an amount of intake air drawn into the engine, intake air amount control means for controlling the amount of intake air adjusted by the intake air amount-adjusting means such that the amount of intake air is reduced, when predetermined stopping conditions for stopping the engine are satisfied, and electric power generation control means for inhibiting electric power generation by the generator until a predetermined time period elapses after the stopping conditions are satisfied, and starting electric power generation by the generator after the predetermined time period elapses.

With this configuration of the electric power generation control system, when the predetermined stopping conditions are satisfied, the engine is caused to be stopped, and after the stopping conditions are satisfied, the amount of intake air drawn into the engine is caused to be reduced. Further, electric power generation by the generator is inhibited until the predetermined time period elapses after the stopping conditions are satisfied, so that during the time period, no load due to electric power generation acts on the engine. This makes it possible to prevent sharp reduction of the rotational speed of the engine. Combined with the control of causing the amount of intake air to be reduced, this makes it possible to prevent occurrence of vibration of the engine when the engine is being stopped. Further, since electric power generation by the generator is started after the lapse of the predetermined time period, this secures a time period over which electric power generation is executed, where possible, thereby making it possible to improve fuel economy through electric power generation.

Preferably, the electric power generation control system further comprises intake air amount parameter-acquiring means for acquiring an intake air amount parameter representing the amount of intake air, and the predetermined time period is a time period which elapses after the stopping conditions are satisfied until the amount of intake air amount represented by the acquired intake air amount parameter becomes not larger than a predetermined value.

With this configuration, electric power generation is inhibited for the predetermined time period after the stopping condition are satisfied until the amount of intake air becomes not larger than the predetermined value. This makes it possible to prevent electric power generation from being executed in a state where the amount of intake air is large, thereby making it possible to positively prevent the vibration of the engine. Further, when the predetermined time period elapses and the intake air amount becomes not larger than the predetermined value, electric power generation is started, and hence it is possible to start electric power generation in the earliest timing after it is judged that there is no fear of the vibration of the engine being caused, and perform electric power generation to the greatest extent possible.

Preferably, the electric power generation control means controls torque used for electric power generation by the generator such that the torque is progressively increased, after starting electric power generation by the generator.

With this configuration, after the predetermined time period elapses, and electric power generation by the generator is started, the degree of electric power generation is progressively increased, and hence it is possible to prevent a sharp increase in the load of the engine at the start of electric power generation. This makes it possible to prevent fluctuation of the rotational speed of the engine, and improve drivability.

The above and other objects, features, and advantages of the present invention will become more apparent from the following detailed description taken in conjunction with the accompanying drawings.

BRIEF DESCRIPTION OF THE DRAWINGS

FIG. 1 is a schematic diagram of an electric power generation control system according to a present embodiment of the invention and an internal combustion engine to which is applied the electric power generation control system;

FIG. 2 is a flowchart showing a process for determining whether idle stop conditions are satisfied;

FIG. 3 is a flowchart showing a process for setting the degree of engagement of a clutch;

FIG. 4 is a flowchart showing a process for setting the degree of engagement of the clutch at an idle stop;

FIG. 5 is a flowchart showing a process for setting an ISV opening; and

FIG. 6 is a timing diagram showing an example of operation obtained by an electric power generation control process at an idle stop.

DETAILED DESCRIPTION OF PREFERRED EMBODIMENTS

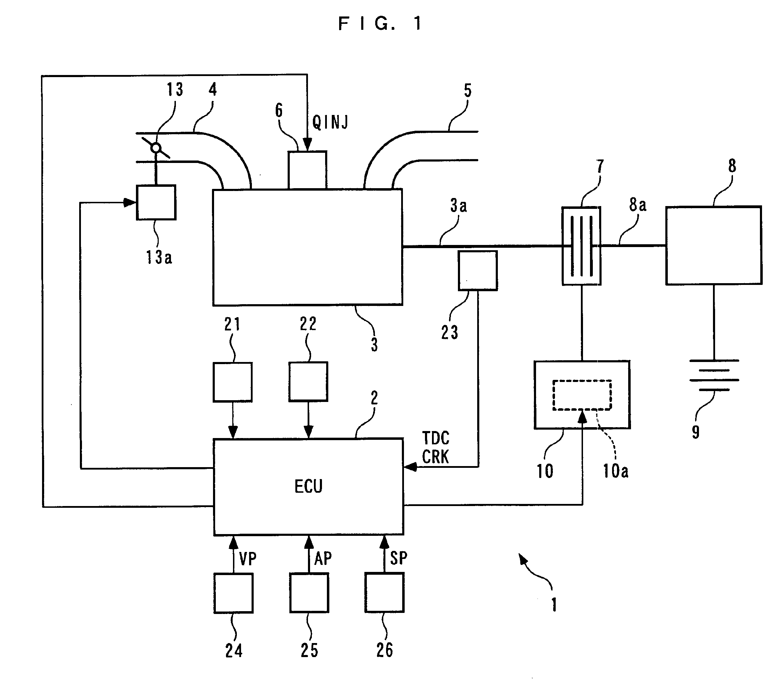

The invention will now be described in detail with reference to drawings showing a preferred embodiment thereof. FIG. 1 schematically shows an electric power generation control system 1 for an internal combustion engine, according to the present embodiment, and the internal combustion engine (hereinafter simply referred to as the "engine") 3 to which is applied the electric power generation control system 1.

The engine 3 is e.g. a four-cylinder diesel engine and is installed on a vehicle (not shown). The engine 3 is connected to drive wheels (not shown) via an automatic transmission (not shown), etc. Further, the engine 3 is an idle stop engine which is automatically stopped when predetermined idle stop conditions are satisfied, and is restarted when the idle stop conditions cease to be satisfied. The idle stop conditions will be described in detail hereinafter.

The automatic transmission is a forward four speed automatic transmission, and is provided with six shift positions of L, 2, D, N, R, and P, for selection of one of the shift positions by operating a shift lever (not shown).

Cylinders (not shown) of the engine 3 are provided with fuel injection valves (hereinafter referred to as the "injectors") 6. Each injector 6 injects fuel supplied from a fuel supply system (not shown) into an associated one of the cylinders. The opening and closing of the injector 6 are controlled by a control signal from an ECU 2, whereby the fuel injection timing is controlled by valve-opening timing of the injector 6, and a fuel injection amount QINJ is controlled by a valve-opening time period thereof.

The engine 3 has a cylinder head (not shown) having an intake pipe 4 and an exhaust pipe 5 connected thereto. The intake pipe 4 is provided with an intake shutter 13. An actuator 13a is connected to the intake shutter 13. The actuator 13a is a combination of a motor and a gear mechanism (neither of which is shown), and is driven by a control signal from the ECU 2. The actuator 13a driven by the control signal changes the opening of the intake shutter 13 (hereinafter referred to as the "ISV opening") AISV whereby an amount of fresh air sucked into each cylinder (hereinafter referred to as the "intake air amount") GAIR is controlled.

The engine 3 has a crankshaft 3a connected to a generator 8 via a clutch 7. The generator 8 has a generator input shaft 8a. The generator input shaft 8a is driven for rotation by the engine 3, whereby electric power is generated. The generated electric power is charged into a battery 9. The battery 9 is used as a power source for driving e.g. a power steering and a starter motor (neither of which is shown).

The clutch 7 is of a hydraulic type which is driven by oil hydraulic pressure supplied from a hydraulic pressure circuit 10. The hydraulic pressure circuit 10 is provided with an electromagnetic valve 10a. The operation of the electromagnetic valve 10a is controlled by the ECU 2, whereby a degree of engagement of the clutch (hereinafter referred to as the "clutch engagement degree") C_CL is controlled. When the clutch 7 is completely engaged, the crankshaft 3a is brought into a state directly connected to the generator input shaft 8a, whereby the rotational speed of the crankshaft 3a (hereinafter referred to as the "engine speed") NE and the rotational speed of the generator input shaft 8a (hereinafter referred to as the "generator speed") NEGE become equal to each other.

On the other hand, the crankshaft 3a is provided with a crank angle sensor 23 comprising a magnet rotor (not shown) and an MRE (Magnetic Resistance Element) pickup (not shown). The crank angle sensor 23 delivers a CRK signal and a TDC signal, which are both pulse signals, to the ECU 2 in accordance with rotation of the crankshaft 3a.

Each pulse of the CRK signal is generated whenever the crankshaft 3a rotates through a predetermined crank angle (e.g. 30° ). The ECU 2 calculates the engine speed NE based on the CRK signal. Further, the TDC signal indicates that a piston (not shown) of one of the cylinders of the engine 3 is at a predetermined crank angle position in the vicinity of TDC (top dead center) at the start of the intake stroke thereof.

Further, the ECU 2 receives from an ignition switch 21 a signal indicative of an on/off state of the ignition switch 21. During operation of the engine 3, when the ignition switch 21 is turned off, supply of fuel from the injector 6 to the cylinders is stopped, and the engine 3 is stopped.

Further, the ECU 2 receives from a brake switch 22 a signal indicative of an on/off state of the brake switch 22. The brake switch 22 is turned on when a brake pedal (not shown) is stepped on by an amount not smaller than a predetermined amount, and otherwise it is turned off.

Furthermore, delivered to the ECU 2 are a detection signal indicative of a vehicle speed VP, i.e. the speed of the vehicle, from a vehicle speed sensor 24, a detection signal indicative of an opening of an accelerator pedal (not shown) operated by a driver (hereinafter referred to as the "accelerator pedal opening") AP, from an accelerator pedal opening sensor 25, and a detection signal indicative of the shift position of the shift lever, from a shift position sensor 26.

Further, the ECU 2 is implemented by a microcomputer (not shown) comprising a CPU, a RAM, a ROM, and an I/O interface (none of which are shown). The detection signals from the aforementioned sensors 23 to 26 are input to the ECU 2, and then are input to the CPU after the I/O interface performs A/D conversion and waveform shaping thereon. Based on these detection signals, the CPU performs various computing operations according to control programs stored in the ROM. In the present embodiment, the ECU 2 corresponds to intake air amount control means and electric power generation control means.

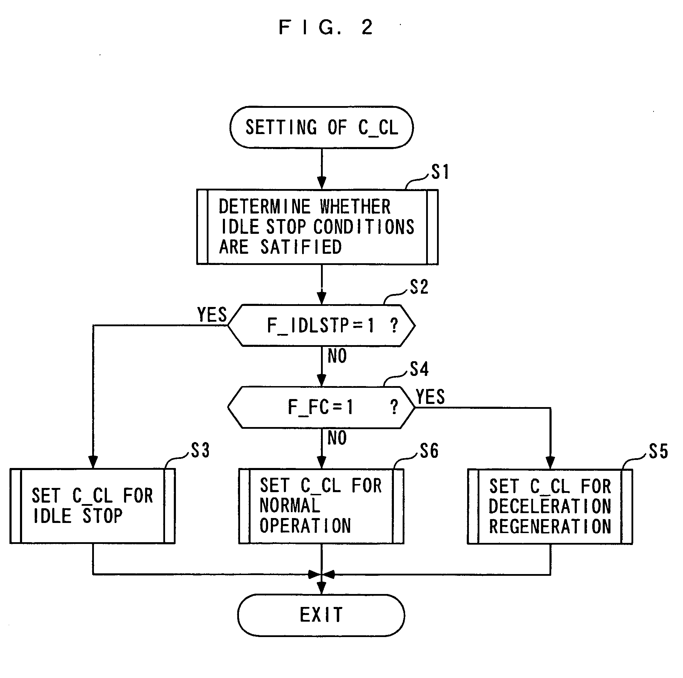

Next, an electric power generation control process of the engine 3 carried out by the ECU 2 will be described with reference to FIGS. 2 to 6. This process is executed whenever a predetermined time period elapses.

FIG. 2 shows a process for setting the clutch engagement degree C_CL of the clutch 7. The clutch engagement degree C_CL is defined as a ratio between the generator speed NEGE and the engine speed NE, as expressed by the following equation (1):

$$C\_CL = NEGE/NE \ ... \ (1)$$

Since the engine 3 is on the drive side, and the generator input shaft 8a is on the driven side, $0 \leqq C\_CL \leqq 1$ holds. In a state where the clutch 7 is completely disengaged, C_CL = 0 holds, whereas in a state where the clutch 7 is directly connected, C_CL = 1 holds. From these definitions, as the clutch engagement degree C_CL is higher, torque used for electric power generation and the amount of electric power generated by the generator 8 become larger. The present process sets the clutch engagement degree C_CL so as to control the torque used for electric power generation.

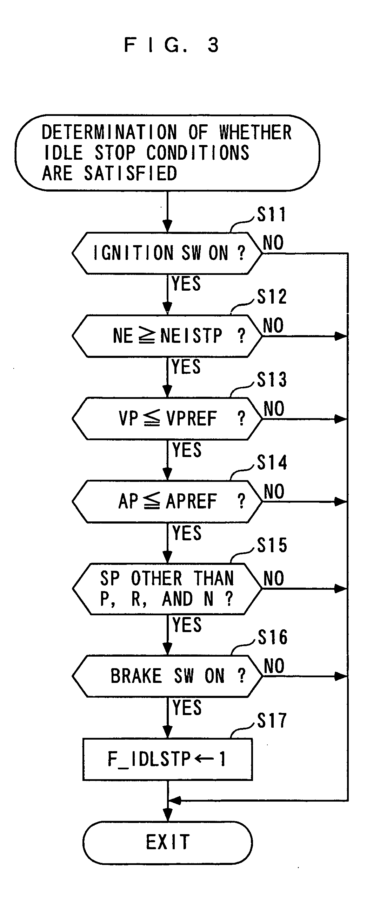

In the present process, first, in a step 1 (shown as "S1" in abbreviated form in FIG. 2; the following steps are also shown in abbreviated form), a process for determining whether the idle stop conditions are satisfied is carried out. FIG. 3 shows a subroutine of this process. In this process, first, in steps 11 to 16, it is determined whether or not the following conditions (a) to (f) are satisfied, respectively.

    (a) The ignition switch (SW) 21 is on.
    (b) The engine speed NE is not lower than a predetermined value NEISTP (e.g. 300 rpm).
    (c) The vehicle speed VP is not higher than a predetermined value VPREF (e.g. 1 km/h).
    (d) The accelerator pedal opening AP is not larger than a predetermined value APREF (e.g. 1 ° ).
    (e) The shift position (SP) is other than P, R, and N.
    (f) The brake switch (SW) 22 is on.

If any of the answers to the respective questions of the steps 11 to 16 is negative (NO), i.e. if any of the conditions (a) to (f) is not satisfied, it is determined that the idle stop conditions are not satisfied, followed by terminating the present process. On the other hand, if all the answers to the respective questions of the steps 11 to 16 are affirmative (YES), it is determined that the idle stop conditions are satisfied, and to indicate the fact, in a step 17, an idle stop flag F_IDLSTP is set to 1, followed by terminating the present process.

Referring again to FIG. 2, in a step 2 following the step 1, it is determined whether or not the idle stop flag F_IDLSTP is equal to 1. If the answer to this question is affirmative (YES), i.e. if the idle stop conditions are satisfied, which means that an idle stop is being performed, in a step 3, a process for setting the clutch engagement degree C_CL for the idle stop is executed, followed by terminating the present process.

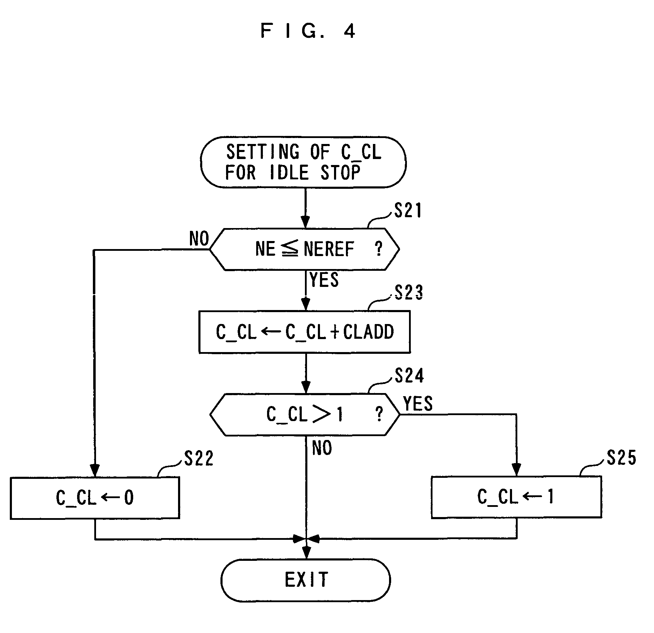

FIG. 4 shows a subroutine of the process for setting the clutch engagement degree C_CL. In the present process, first, in a step 21, it is determined whether or not the engine speed NE is not larger than a predetermined threshold value NEREF (e.g. 400 rpm). If the answer to this question is negative (NO), i.e. if NE > NEREF holds, it is judged that the intake air amount GAIR is not sufficiently reduced, and there is a fear that vibration of the engine 3 is caused if electric power generation is performed in this state, so that in a step 22, the clutch engagement degree C_CL is set to 0 to inhibit power generation, followed by terminating the present process.

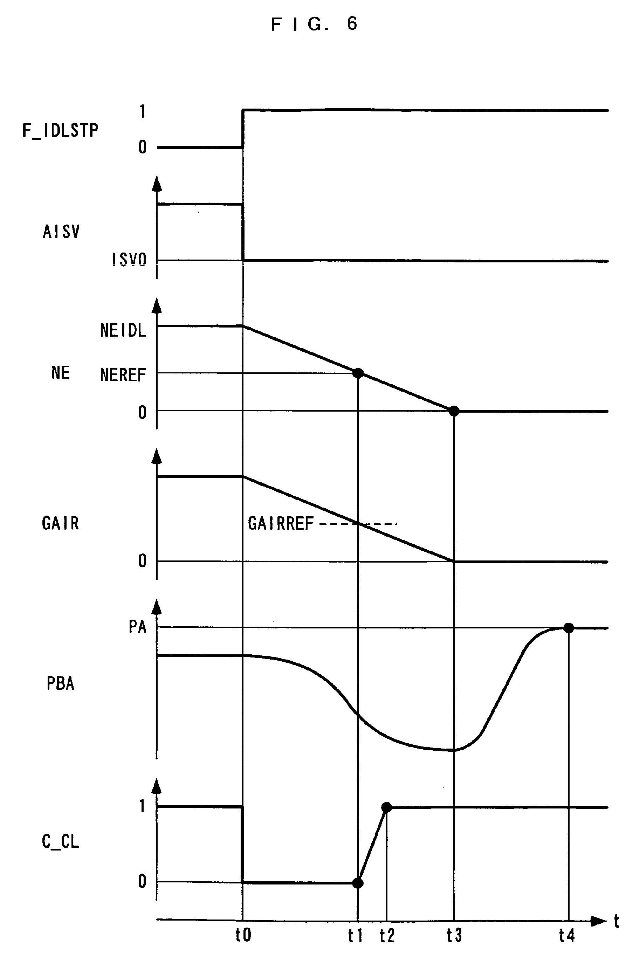

On the other hand, if the answer to the question of the step 21 is affirmative (YES), i.e. if NE ≦ NEREF holds, it is judged that the intake air amount GAIR is sufficiently reduced below a predetermined value GAIRREF (see FIG. 6), and there is no fear of vibration of the engine 3 being caused even if electric power generation is performed in this state, and in order to start electric power generation, in a step 23, the present clutch engagement degree C_CL is calculated by adding a predetermined value CLADD (e.g. 0.1) to the immediately preceding clutch engagement degree C_CL.

Next, in a step 24, it is determined whether or not the calculated present clutch engagement degree C_CL is larger than 1 which is an upper limit value. If the answer to this question is negative (NO), i.e. if C_CL ≦ 1 holds, the present process is immediately terminated. On the other hand, if the answer to the question of the step 24 is affirmative (YES), i.e. if C_CL > 1 holds, in a step 25, the clutch engagement degree C_CL is limited to 1, followed by terminating the present process.

As described above, in executing an idle stop, if the engine speed NE is larger than the threshold value NEREF, the clutch engagement degree C_CL is set to 0 to disengage the clutch 7, thereby inhibiting power generation. Further, after that, when the engine speed NE becomes equal to or smaller than the threshold value NEREF, the clutch 7 is connected to start generation of electric power. Further, during a predetermined time period immediately after the start of electric power generation, the clutch engagement degree C_CL is progressively increased up to 1 by being incremented each time by the predetermined value CLADD, whereby the torque used for electric power generation is progressively increased without suddenly engaging the clutch 7.

Referring again to FIG. 2, if the answer to the question of the above-mentioned step 2 is negative (NO), i.e. if the idle stop is not being performed, in a step 4, it is determined whether or not a fuel cut flag F_FC is equal to 1. If the answer to this question is affirmative (YES), i.e. if deceleration fuel cut is being performed for reducing the fuel injection amount QINJ to 0 during deceleration of the vehicle, in a step 5, a process for setting the clutch engagement degree C_CL for deceleration regeneration is executed, followed by terminating the present process. In this setting process, demanded power generation voltage demanded of the generator 8 is calculated according to the engine speed NE and the remaining charge of the battery 9, and the clutch engagement degree C_CL is calculated by searching a predetermined map for the deceleration regeneration according to the calculated demanded power generation voltage. In this map, the clutch engagement degree C_CL is set to a larger value as the demanded power generation voltage is larger.

On the other hand, if the answer to the question of the above-mentioned step 4 is negative (NO), i.e. if the deceleration fuel cut is not being performed, in a step 6, a process for setting the clutch engagement degree C_CL for normal operation is executed, followed by terminating the present process. In this setting process, the demanded power generation voltage demanded of the generator 8 is calculated according to the engine speed NE and the remaining charge of the battery 9, and the clutch engagement degree C_CL is calculated by searching a predetermined map for normal operation according to the calculated demanded power generation voltage. In this map, the clutch engagement degree C_CL is set to a larger value as the demanded power generation voltage is larger.

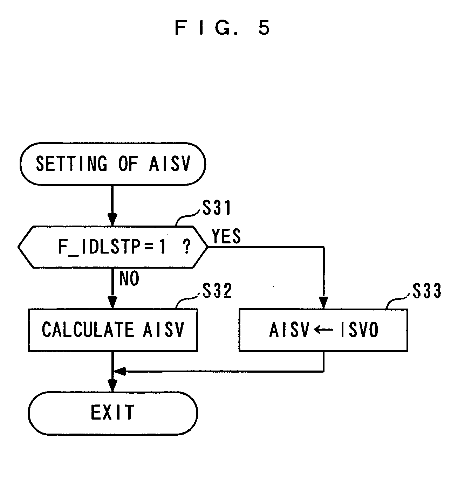

FIG. 5 shows a process for setting the ISV opening AISV. In the present process, first, in a step 31, it is determined whether or not the idle stop flag F_IDLSTP is equal to 1. If the answer to this question is negative (NO), i.e. if the idle stop is not being performed, in a step 32, the ISV opening AISV for other than the idle stop is calculated, followed by terminating the present process. More specifically, when the engine is performing a normal operation other than an idle operation, the ISV opening AISV is calculated by searching a predetermined map according to the detected accelerator pedal opening AP. In this map, the ISV opening AISV is set to a larger value as the accelerator pedal opening AP is larger. When the engine is performing an idle operation, the ISV opening AISV is set such that the engine speed NE becomes equal to a predetermined idle speed NEIDL.

On the other hand, if the answer to the question of the above-mentioned step 31 is affirmative (YES), i.e. if the idle stop is being performed, the ISV opening AISV is set to a predetermined value ISVO, followed by terminating the present process. This predetermined value ISV0 is set to a very small value close to 0.

FIG. 6 shows an example of operation obtained by the above-described power generation control process of the engine 3 at an idle stop. In this example, although the vehicle is stopped before a time point tO (VP = 0), the idle stop conditions are not satisfied, so that the idle stop flag F_IDLSTP is set to 0, and the idle operation is performed. Further, at this time, the ISV opening AISV is set such that the engine speed NE becomes equal to the idle speed NEIDL, and the intake air amount GAIR and pressure in the intake pipe (hereinafter referred to as the "intake pressure") PBA are set to respective values corresponding to the ISV opening AISV and the idle speed NEIDL. Further, the clutch engagement degree C_CL is set to 1.

When the idle stop conditions are satisfied (t0), the idle stop flag F_IDLSTP is set to 1 (step 17), and the idle stop is started. Further, at the same time, the clutch engagement degree C_CL is set to 0 (step 22), whereby the clutch 7 is disengaged, and the ISV opening AISV is set to the predetermined very small value ISV0 close to 0 (step 33). In accordance with the above settings, the engine speed NE, the intake air amount GAIR, and the intake pressure PBA are progressively reduced. When the engine speed NE is reduced to the threshold value NEREF (t1), it is judged that the intake air amount GAIR has become equal to or smaller than the predetermined value GAIRREF, so that the clutch engagement degree C_CL is set to the predetermined value CLADD (step 23), whereby electric power generation is started. After that, the clutch engagement degree C_CL is progressively increased up to 1 by being incremented each time by the predetermined value CLADD (steps 23 to 25, t1 to t2). Then, when the engine speed NE becomes equal to 0 (t3), i.e. the engine 3 is stopped, the intake air amount GAIR becomes equal to 0, and the intake pressure PBA becomes equal to atmospheric pressure PA (t4 et seq.).

As described above, according to the present embodiment, the clutch 7 is disengaged for a predetermined time period after satisfaction of the idle stop conditions (step 22 in FIG. 4) to thereby inhibit electric power generation by the generator 8, so that during the predetermined time period, no load due to electric power generation acts on the engine 3, thereby making it possible to prevent sharp reduction of the engine speed NE. Combined with the control of the ISV opening AISV to the predetermined very small value ISV0 close to 0 (step 33 in FIG. 5), this makes it possible to prevent occurrence of vibration of the engine 3 at an idle stop. Further, when the engine speed NE becomes equal to or smaller than the threshold value NEREF, electric power generation is started by the generator 8 (YES to the step 21 in FIG. 4). This secures a time period over which electric power generation is executed, where possible, thereby making it possible to improve fuel economy through electric power generation.

Further, after the idle stop conditions are satisfied, electric power generation is inhibited until the engine speed NE becomes equal to or smaller than the threshold value NEREF (steps 21 and 22 in FIG. 4), so that it is possible to prevent electric power generation from being executed in a state where the intake air amount GAIR is large, thereby making it possible to positively prevent the vibration of the engine 3. Further, when the engine speed NE becomes equal to or smaller than the threshold value NEREF, it is judged that the intake air amount GAIR has become equal to or smaller than the predetermined value GAIRREF, and electric power generation is started (YES to the step 21 in FIG. 4). This makes it possible to start electric power generation in the earliest timing after it is judged that there is no fear of the vibration of the engine 3, and perform electric power generation to the greatest extent possible.

Furthermore, after the engine speed NE becomes equal to or smaller than the threshold value NEREF, and electric power generation is started by the generator 8, the clutch engagement degree C_CL is progressively increased to 1 (steps 23 to 25 in FIG. 4), and hence it is possible to prevent a sharp increase in the load of the engine 3 by sudden connection of the clutch 7 at the start of electric power generation, which makes it possible to prevent fluctuation in the engine speed NE and improve drivability.

It should be noted that the present invention is by no means limited to the above-described embodiment, but it can be practiced in various forms. For example, although in the above-described embodiment, the engine speed NE is used as a parameter representing the intake air amount GAIR, and when the engine speed NE becomes equal to or smaller than the threshold value NEREF, it is judged that the intake air amount GAIR has become equal to or smaller than the predetermined value GAIRREF, and electric power generation is started, but any other suitable parameter representing the intake air amount GAIR may be used in place of or in combination with the engine speed NE. For example, by using one or two or more of the detected ISV opening AISV, the intake pressure PBA, and a time period which has elapsed after the satisfaction of the idle stop conditions, electric power generation may be started when the parameter(s) has/ have become equal to a value or respective values indicating that the intake air amount GAIR has become equal to or smaller than the predetermined value GAIRREF. Further, by directly detecting the intake air amount GAIR, electric power generation may be started when the detected intake air amount GAIR has become equal to or smaller than the predetermined value GAIRREF.

Further, although in the above-described embodiment, the idle stop conditions are used as conditions for stopping the engine 3 for power generation control, instead of this, the power generation control may be executed when the ignition switch 21 is turned off.

Further, although in the above-described embodiment, electric power generation by the generator 8 is mechanically inhibited by disengagement of the clutch 7, this is not limitative, but using any other suitable inhibition means e.g. by electrically controlling the operation of the generator 8, load due to electric power generation may be prevented from acting on the engine 3.

Further, although in the above-described embodiment, the intake air amount GAIR is adjusted using the intake shutter 13, the intake shutter 13 may be replaced e.g. by intake valves the lift of which can be changed by a variable intake lift mechanism.

Furthermore, although in the above-described embodiment, the present invention is applied to a diesel engine installed on a vehicle, by way of example, this is not limitative, but the present invention may be applied to various types of engines, such as a gasoline engine, other than the diesel engine. Further, the present invention can also be applied to engines other than engines for vehicles, including engines for ship propulsion machines, such as an outboard motor having a vertically-disposed crankshaft.

It is further understood by those skilled in the art that the foregoing are preferred embodiments of the invention, and that various changes and modifications may be made without departing from the scope thereof.

## Claims

1. A power generation control system (1) for an internal combustion engine (3), for controlling electric power generation by a generator (8) connected to the engine (3) when the engine (3) is being stopped, comprising intake air amount-adjusting means (13, 13a) for adjusting an amount of intake air drawn into the engine (3);

   **characterized by**

   intake air amount control means (2) for controlling the amount of intake air adjusted by said intake air amount-adjusting means (13, 13a) such that the amount of intake air is reduced, when predetermined stopping conditions for stopping the engine (3) are satisfied; and

   electric power generation control means (2) for inhibiting electric power generation by the generator (8) until a predetermined time period elapses after the stopping conditions are satisfied, and starting electric power generation by the generator (8) after the predetermined time period elapses.

2. The power generation control system (1) as claimed in claim 1, further comprising intake air amount parameter-acquiring means (2) for acquiring an intake air amount parameter representing the amount of intake air, and

   wherein the predetermined time period is a time period which elapses after the stopping conditions are satisfied until the amount of intake air amount represented by the acquired intake air amount parameter becomes not larger than a predetermined value.

3. The power generation control system (1) as claimed in claim 1 or 2, wherein said electric power generation control means (2) controls torque used for electric power generation by the generator (8) such that the torque is progressively increased, after starting electric power generation by the generator (8).

## Patentansprüche

1. Stromerzeugungssteuerungssystem (1) für einen Verbrennungsmotor (3) zum Steuern/Regeln der elektrischen Stromerzeugung durch einen mit dem Motor (3) verbundenen Generator (8), wenn der Motor (3) gestoppt wird, umfassend ein Ansaugluftmengeneinstellmittel (13, 13a), zum Einstellen einer in den Motor (3) gesaugten Ansaugluftmenge; **gekennzeichnet durch**

   ein Ansaugluftmengensteuerungsmittel (2) zum Steuern/Regeln der von dem Ansaugluftmengeneinstellmittel (13, 13a) eingestellten Ansaugluftmenge, derart, dass die Ansaugluftmenge verringert wird, wenn vorbestimmte Stoppbedingungen zum Stoppen des Motors (3) erfüllt sind; und

   ein Elektrische-Stromerzeugungssteuerungsmittel (2) zum Verhindern der elektrischen Stromerzeugung **durch** den Generator (8), bis eine vorbestimmte Zeitdauer abgelaufen ist, nachdem die Stoppbedingungen erfüllt sind, und zum Starten der elektrischen Stromerzeugung **durch** den Generator (8) nach Ablauf der vorbestimmten Zeitdauer.

2. Das Stromerzeugungssteuerungssystem (1) nach Anspruch 1, das ferner ein Ansaugluftmengenparametererfassungsmittel (2) zum Erfassen eines die Ansaugluftmenge repräsentierenden Ansaugluftmengenparameters aufweist, und

   worin die vorbestimmte Zeitdauer eine Zeitdauer ist, die abläuft, nachdem die Stoppbedingungen erfüllt sind, bis die von dem erfassten Ansaugluftmengenparameter repräsentierte Ansaugluftmenge nicht größer als ein vorbestimmter Wert wird.

3. Das Stromerzeugungssteuerungssystem (1) nach Anspruch 1 oder 2, worin das Elektrische-Stromerzeugungssteuerungsmittel (2) das zur elektrischen Stromerzeugung durch den Generator (8) verwendete Drehmoment derart steuert/regelt, dass nach dem Start der elektrischen Stromerzeugung durch den Generator (8) das Drehmoment fortschreitend erhöht wird.

## Revendications

1. Système de commande de production d'énergie (1) pour un moteur à combustion interne (3), pour commander la production d'énergie électrique par une génératrice (8) connectée au moteur (3) lorsque le moteur (3) est arrêté, comprenant des moyens d'ajustement de quantité d'air d'admission (13, 13a) pour ajuster une quantité d'air d'admission aspirée dans le moteur (3) ;

**caractérisé par**

des moyens de commande de quantité d'air d'admission (2) pour commander la quantité d'air d'admission ajustée par lesdits moyens d'ajustement de quantité d'air d'admission (13, 13a) de sorte que la quantité d'air d'admission est réduite, lorsque des conditions d'arrêt prédéterminées pour arrêter le moteur (3) sont satisfaites ; et

des moyens de commande de production d'énergie électrique (2) pour empêcher la production d'énergie électrique par la génératrice (8) jusqu'à ce qu'une période de temps prédéterminée se soit écoulée après que les conditions d'arrêt ont été satisfaites, et débuter la production d'énergie électrique par la génératrice (8) après que la période de temps prédéterminée s'est écoulée.

2. Système de commande de production d'énergie (1) selon la revendication 1, comprenant en outre des moyens d'acquisition de paramètre de quantité d'air d'admission (2) pour acquérir un paramètre de quantité d'air d'admission représentant la quantité d'air d'admission, et

dans lequel la période de temps prédéterminée est une période de temps qui s'écoule après que les conditions d'arrêt ont été satisfaites jusqu'à ce que la quantité de la quantité d'air d'admission représentée par le paramètre de quantité d'air d'admission devienne inférieure ou égale à une valeur prédéterminée.

3. Système de commande de production d'énergie (1) selon la revendication 1 ou 2, dans lequel lesdits moyens de commande de production d'énergie électrique (2) commandent un couple utilisé pour la production d'énergie électrique par la génératrice (8) de sorte que le couple est augmenté progressivement, après le commencement de la production d'énergie électrique par la génératrice (8).

FIG. 1

EP 2 301 817 B1

F I G.   2

SETTING OF C_CL

S1

DETERMINE WHETHER
IDLE STOP CONDITIONS
ARE SATIFIED

S2

YES — F_IDLSTP=1  ?

NO

S4

F_FC=1     ? — YES

NO

S3

SET C_CL FOR
IDLE STOP

S6

SET C_CL FOR
NORMAL
OPERATION

S5

SET C_CL FOR
DECELERATION
REGENERATION

EXIT

F I G. 3

DETERMINATION OF WHETHER
IDLE STOP CONDITIONS
ARE SATISFIED

S11
IGNITION SW ON ?  NO

YES

S12
NE ≧ NEISTP ?  NO

YES

S13
VP ≦ VPREF ?  NO

YES

S14
AP ≦ APREF ?  NO

YES

S15
SP OTHER THAN
P, R, AND N ?  NO

YES

S16
BRAKE SW ON ?  NO

YES

S17
F_IDLSTP ← 1

EXIT

F I G. 4

SETTING OF C_CL
FOR IDLE STOP

S21

NO ⟨ NE ≦ NEREF ? ⟩

YES

S23

C_CL ← C_CL + CLADD

S24

⟨ C_CL > 1 ? ⟩ YES

NO

S22

C_CL ← 0

S25

C_CL ← 1

EXIT

F I G. 5

SETTING OF AISV

F_IDLSTP=1 ? — S31

YES

NO

CALCULATE AISV — S32

AISV ← ISVO — S33

EXIT

FIG. 6

**EP 2 301 817 B1**

**REFERENCES CITED IN THE DESCRIPTION**

**Patent documents cited in the description**

- JP 3838188 B
- DE 10249621 A1